# EUROPEAN PATENT SPECIFICATION

(11) **EP 3 118 479 B1**
(45) Date of publication and mention of the grant of the patent: **22.08.2018**
(21) Application number: 15176867.8
(22) Date of filing: 15.07.2015
(51) Int. Cl.: F16F 9/36, F16F 6/00, B64C 25/58

(54) **AIRCRAFT LANDING GEAR SHOCK ABSORBER**
FLUGZEUGFAHRWERKSTOSSDÄMPFER
AMORTISSEUR DE CHOCS POUR TRAIN D'ATTERRISAGE D'AERONEF

(43) Date of publication of application: 18.01.2017
(73) Proprietor: Safran Landing Systems UK Ltd, Gloucester, Gloucestershire GL2 9QH (GB)
(72) Inventor: Simonneaux, Yann, Glouchester Glouchestershire GL2 9QH (GB); Whitman, Steve, Glouchester Glouchestershire GL2 9QH (GB)
(74) Representative: Latham, Stuart Alexander

(56) References cited:
- WO-A1-2008/055863
- DE-A1- 19 840 244
- JP-A- S 643 338
- US-A- 4 381 857

## Description

### Background to the Invention

A shock absorber can comprise a first body slidably coupled to a second body via one or more bearings such that the first body can move relative to the second body in a linear fashion between a relatively extended condition and a relatively compressed condition.

Shock absorbing means, such as fluid contained within a chamber which varies in volume in accordance with the extension state of the shock absorber, absorbs energy from loads attempting to contract and/or extend the shock absorber.

Spring means biases the shock absorber to assume the compressed condition or extended condition, the extended condition being most common in vehicle suspension systems such as aircraft landing gear.

JP S64-3338 A discloses a shock absorber having a piston with a magnet inside a cylinder. Further magnets are provided within the cylinder on opposite sides of the piston and arranged to repel the piston magnet.

The present inventors have realised that known shock absorbers can be improved in terms of one or more of: simplicity; weight; strength/robustness; aerodynamic performance and aero-acoustic performance.

### Summary of Invention

According to a first aspect of the present invention there is provided an aircraft landing gear shock absorber according to claim 1.

Thus, the magnetic shock absorber according to the first aspect includes a bearing which defines a non-circular interface arranged to inhibit relative axial rotation between the bodies. A torsion force acting on the one of the bodies is reacted by the other body via the first bearing. Moreover, in view of the fact that the shock absorbing properties of the shock absorber are provided by magnets, the non-circular bearing is relatively simple to implement because there is no requirement for, say, a fluid tight, dynamic seal between the first body and second body, as would be the case if the shock absorbing properties were provided by, say, an oleo-pneumatic arrangement.

The non-circular profile of the first bearing can match or conform in shape with respect to the non-circular profile of the first counter-face. Put another way, the cross sectional profile of each side of the bearing can be complimentary in shape so as to slide in mating engagement. This can limit axial play between the bodies in order to maintain axial alignment and limit the amount of relative axial rotation that is possible before the bearing surface contacts the counter-face.

In some embodiments, one or each bearing surface and/or the associated counter-face can be formed by a plurality of discrete components which are mechanically coupled together to as to define a non-continuous cross-sectional bearing surface and/or counter-face surface; for example, a rectangular profile first counter-face can be slidably mounted within four generally L shaped corner portions of the first bearing which are not directly connected to one another to form a continuous bearing surface, but rather are spatially fixed via the body which mounts them.

The first body and the second body can each be elongate.

The first body can be arranged to receive the second body.

The first bearing can be rotatably mounted on the body such that the other body can be axially rotated relative to the body by rotating the collar. The collar can be actuated by traditional rack and pinion or steering actuator(s).

The first bearing can be mounted at an end region of the first body. The first bearing can be arranged to define a bearing channel which receives the first counter-face portion of the second body.

The assembly comprises a second bearing. This can be advantageous in embodiments where the shock absorber is intended to experience large tangential loads in use; for example, a shock strut of an aircraft landing gear.

The second bearing can be mounted on the second body, for example at an end region of the second body which is closest to or resides within the first body.

Alternatively, the first bearing can be mounted at an end region of the second body which resides within the first body, in which case the first bearing can be provided around the second body and arranged to move in sliding engagement with an inner sidewall surface counter-face of the first body.

In such embodiments, the second bearing can be mounted at an end region of the first body. The second bearing can be arranged to define a bearing channel which receives the first counter-face portion of the second body.

The second bearing can be mounted on the first body, between the end regions thereof. Advantageously, this arrangement results in a shock absorber in which there is no sliding contact between an inner wall of the first body and the second body, other than at the surface of the or each bearing.

In all embodiments, the second bearing can have a circular profile, or a non-circular profile. The non-circular profile can conform to that of the first bearing, or can be a different non-circular profile in comparison to the first bearing.

The shock absorber can include a third array of one or more magnets associated with the first body, the third magnet array being arranged to magnetically interact with the second magnet array to absorb axial loads applied to the shock absorber. Thus, the third magnet array can provide damping during shock absorber extension.

The magnet arrays can each comprise permanent magnets and/or electromagnets. In embodiments where a magnet array comprises electromagnets, the polarity of the electromagnets can be reversed to cause the shock absorber to shorten. This can be useful in the context of an aircraft landing gear because it enables the shock strut to be shortened following take off for stowage.

The magnet arrays can be arranged to act on one another axially or radially.

The first body and/or second body can be generally cylindrical. This can result in an aerodynamic profile which limits aero-acoustic noise.

In accordance with a further aspect of the invention, there is provided an aircraft landing gear assembly including a shock absorber according to the first aspect acting as a shock strut, with an upper fitting arranged to be coupled to an aircraft and at a lower end being arranged to be coupled to a wheel assembly.

The shock absorber enables torque links to be dispensed with, thereby reducing weight and/or aero-acoustic noise.

### Brief Description of the Drawings

Embodiments of the invention will now be described, strictly by way of example only, with reference to the accompanying drawings, in which:
Figure 1 is a schematic representation showing a longitudinal cross-sectional view of a known landing gear including a shock strut;
Figure 2 is a schematic representation showing a longitudinal cross-sectional view of a landing gear including a shock strut according to an embodiment of the invention;
Figure 3 is a schematic representation showing a longitudinal cross-sectional view of a landing gear including a shock strut according to a further embodiment of the invention;
Figure 4 is a schematic representation showing a longitudinal cross-sectional view of a landing gear including a shock strut according to a further embodiment of the invention; and
Figure 5 is a schematic representation showing a lateral cross-sectional view of a shock absorber according to a further embodiment of the invention.

### Description of the Embodiments

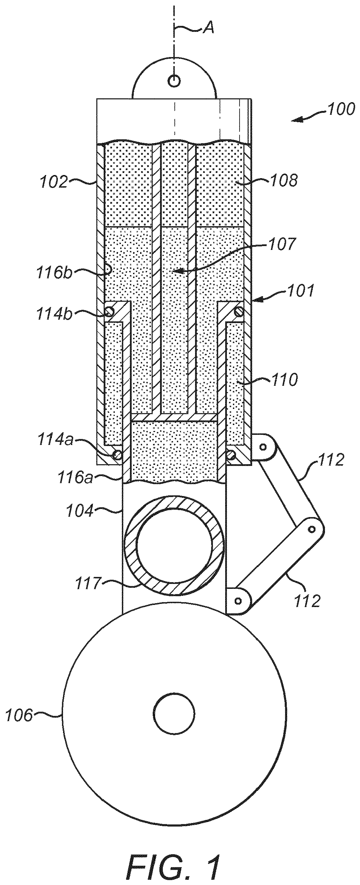

Referring first to Figure 1, a known aircraft landing gear, is shown generally at 100.

The landing gear 100 includes a shock absorber or shock strut 101 which has a cylindrical first body 102, also referred to as a main fitting. A first end of a cylindrical second body 104 known in the art as a piston or slider is slidably coupled within a bore, formed within the first body 102. A second end of the second body 104 which is disposed outside of the first body 102, is coupled to a wheel assembly 106.

The first body 102 and the second body 104 together define a chamber 107 for containing a fluid. The fluid may be liquid such as oil, or gas such as air or nitrogen. In the illustrated example the shock strut is oleo-pneumatic, where the chamber 107 includes both gas 108 and liquid 110 such as oil. Energy is absorbed from loads attempting to contract and/or extend the shock absorber 101 by forcing the oil 110 through damping orifices (not shown) and when the shock absorber is compressed the gas 108 is compressed. The compressed gas serves as a spring to bias the shock absorber 101 to assume the extended condition. The chamber 107 is sealed by a combination of static and dynamic seals (not shown).

A lower end of the first body 102 is provided with a first bearing 114a. The first body 102 is slidably coupled to the second body 104 via the first bearing 114a such that the bodies 102, 104 can move relative to one another in a linear fashion to change the shock absorber 101 between a relatively extended condition and a relatively compressed condition. The first bearing 114a is annular and mounted within the first body 102 so as to have an inwardly facing bearing face which defines a bearing channel. The first bearing 114a is arranged to move in sliding engagement with a first counter-face portion 116a of the second body 104 as the shock absorber 101 is changed between the relatively extended and compressed conditions.

The shock absorber also includes a second bearing 114b mounted at an upper end region of the second body 104, within the chamber 107. The second bearing 114b is also annular in form and provided around the second body 104 so as to have an outwardly facing bearing face. The second bearing 114b is arranged to move in sliding engagement with a second counter-face portion 116b of the inner surface of the first body 102 as the shock absorber 101 is changed between the relatively extended and compressed conditions.

The first counter-face portion 116a of the second body 104 has a circular cross-sectional profile, as indicated at 117. The first bearing 114a has a corresponding circular profile. Likewise, the cylindrical inner surface of the first body 102 which defines the second counter-face portion 116b has a circular cross-sectional profile and the second bearing 114b has a corresponding circular profile.

A torque link 112 couples the second body 104 to the first body 102 to inhibit axial rotation about axis A between the first body 102 and the second body 104 when a torsion load is applied to one of the bodies 102, 104.

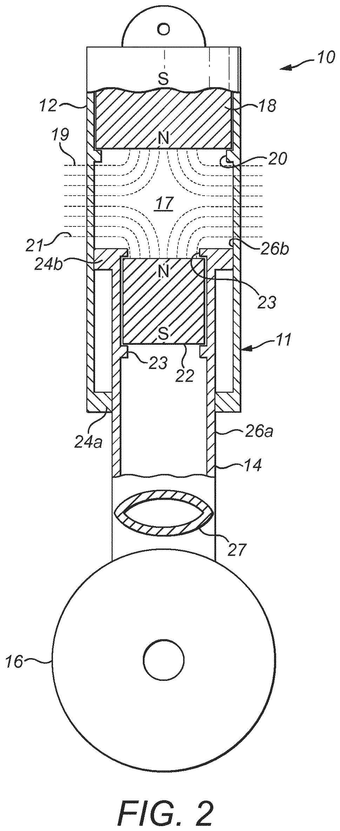

In Figure 2 an aircraft landing gear is shown generally at 10 including a shock absorber, or shock strut, 11 according to an embodiment of the invention.

The shock absorber 11 comprises a cylindrical first body 12 arranged to form the main fitting of the aircraft landing gear 10. A first end of a second body 14 which serves as a piston or slider is slidably coupled within a cavity 17, formed within the first body 12. A second end of the second body 14 which is disposed outside of the first body 12, is coupled to a wheel assembly 16.

A first magnet array 18 is mounted within the cavity 17 of first body 12. The first magnet array 18 can comprise one or more permanent magnets and is held in place by any suitable means, such as bonding, mechanical fixings or by an internal radial projection 20.

A second magnet array 22 is mounted on or in the second body 14 at an end region within the cavity 17. The second magnet array 22 can comprise one or more permanent magnets and is held in place by any suitable means, such as bonding, mechanical fixings or by internal radial projections 23.

The magnet arrays 18, 22 are arranged with like poles facing one another so that the first and second magnet arrays 18, 22 are arranged to magnetically interact with one another via fluxes 19, 21 to absorb compressive loads applied to the shock absorber 11.

A lower end of the first body 12 is provided with a first bearing 24a. The first body 12 is slidably coupled to the second body 14 via the first bearing 24a such that the bodies 12, 14 can move relative to one another in a linear fashion to change the shock absorber 11 between a relatively extended condition and a relatively compressed condition. The first bearing 24a is generally annular and mounted within the first body 12 so as to have an inwardly facing bearing surface which defines a bearing channel. The first bearing 24a is arranged to move in sliding engagement with a first counter-face portion 26a of the second body 14 as the shock absorber 11 is changed between the relatively extended and compressed conditions.

The shock absorber also includes a second bearing 24b mounted at an upper end region of the second body 14, within the bore 17. The second bearing 24b is generally annular and provided around the second body 14 so as to have an outwardly facing bearing face. The second bearing 24b is arranged to move in sliding engagement with a second counter-face portion 26b of the inner surface of the first body 12 as the shock absorber 11 is changed between the relatively extended and compressed conditions.

The first counter-face portion 26a of the second body 104 has a non-circular cross-sectional profile, as indicated at 27. In this embodiment, the first counter-face portion 26a of the second body 104 has an oval cross section. The first bearing 24a has a corresponding oval profile such that the bearing surface and counter-face conform in shape. Thus, the first bearing 24a and the first counter-face portion 26a each has a non-circular cross section profile such that side walls of the first bearing 26a, which define the bearing surface, and the side walls of the first counter-face portion 26a can be brought into mutual engagement to inhibit axial relative rotation between the bodies 12, 14. Thus, the landing gear 10 does not require a torque link, which can reduce weight and/or aero-acoustic noise.

In this embodiment, the cylindrical inner surface of the first body 12 which defines the second counter-face portion 26b has a circular cross-sectional profile and the second bearing 24b has a corresponding circular profile. As such, the second bearing 24b does not inhibit axial relative rotation between the bodies 12, 14. However, both bearings and counter-face portions can have non-circular cross-sectional profiles. In other embodiments, just the second bearing 24b and second counter-face portion 26b can have non-circular profiles.

Advantageously, in view of the magnetic or electromagnetic shock absorbing and spring means, the bearing 24a is simple to implement in that there is no requirement to provide non-circular dynamic seals in conjunction with the bearing 24a to inhibit the passage of shock absorber fluid.

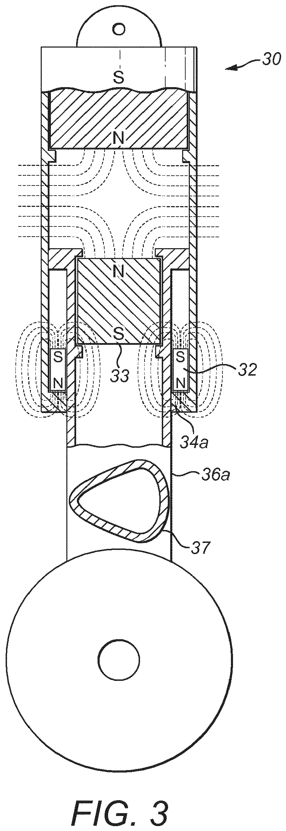

Figure 3 shows an aircraft landing gear shock absorber 30 which is similar to the shock absorber of Figure 2. However, in this embodiment a third magnet array 32 is provided to oppose extension of the shock absorber 30 and the first bearing 34a and first counter-face 36a have generally triangular, curved cross sectional profiles. The third magnet array 32 can be an annular permanent magnet with its poles arranged to act on the second magnet array 33 as the shock absorber 30 extends to damp extension. Thus, the third magnet array 32 can dampen extension.

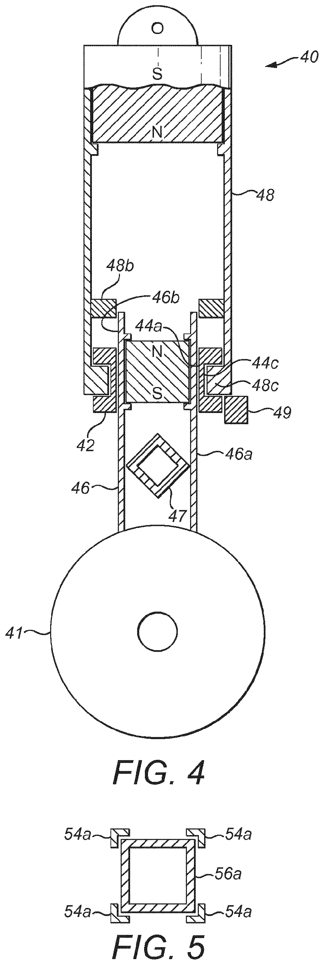

Figure 4 shows an aircraft landing gear shock absorber 40 which is similar to the shock absorber of Figure 2.

However, in this embodiment a collar 42 is rotatably mounted at the bottom end of the first body by a circular bearing 48c so as to be rotatable relative to the first body 48. An inner sidewall of the collar 42 defines the first, non-circular bearing 44a, which is arranged for sliding engagement with a non-circular counter-face portion 46a of the second body 46. In this embodiment the first bearing 44a and associated counter face portion 46a have complimentary rectangular profiles as illustrated at 47. A steering mechanism or actuator 49 can be provided to control the orientation of the collar 42 to enable the second body 46 to be rotated relative to the first body 48 to steer the wheel assembly 41.

Also, the second bearing 48b projects from the inner surface of the first body 48 and is arranged for sliding engagement with a second counter-face 46b defined by the second body 46. This type of second bearing can be applied to any embodiment of the invention.

In any embodiment, the bearing surface(s) and/or counter-face(s) can have any non-circular profile, such as elliptical, rectangular, triangular, or a figure of eight. Curved profiles are preferred to reduce stress raisers and/or reduce acoustic noise.

Although the bearing and counter-face pairs have been described as having corresponding non-circular profiles, the non-circular profiles within a pair can differ from one another. In some embodiments, the cross sectional profile of a bearing and/or counter-face need not be a continuous profile; for example, as illustrated in Figure 5, a rectangular profile counter-face portion 56a can be slidably mounted within four generally L shaped corner bearing portions 54a that are not connected to one another to form a continuous bearing surface, but rather are spatially fixed via the body (not shown) or other mounting structure.

In any embodiment, the bearing surface can be defined by part of a body, defined by a separate bearing that is fitted within a slot of the body or held by a bearing carrier, possibly with a liner material provided between the bearing and the body and/or carrier.

In any embodiment, the bodies and/or the counter face portions thereof can be made of any suitable material such as aluminium, steel, titanium, or a non-metallic material such as a fibre composite material. In some embodiments the counter-face portion can be defined by a separate bearing coupled to the body.

In any embodiment, the bearings and/or the bearings surfaces can be made of any suitable material such as bronze or a non-metallic material such as a self-lubricating polymer.

It will be appreciated that in embodiments of the invention the first and second bodies can take various shapes that are coupled together to be movable relative to one another along a shock absorbing axis to move the first and second magnet assemblies relative to one another such that the magnet assemblies can absorb compressive and/or expansive loads applied to the shock absorber.

Any suitable magnetic shock absorbing and/or spring means can be provided comprising permanent magnets and/or electromagnets. The use of magnetic and electromagnetic shock absorbing and/or spring means is known in the field of electromagnetic actuators and as such, for brevity, these systems will not be described in any detail. In embodiments utilising permanent magnets, the shock absorber will always be biased to assume one or the extended or compressed conditions, optionally with a third permanent magnet array which dampens recoil as the shock absorber nears the biased extension state. In embodiments utilising electromagnets, the shock absorber can be provided with known limit switches or proximity sensors which provide an indication of the extension state of the shock absorber. These signals can be fed into a control system which can control power to the electromagnets.

Although the invention has been described above with reference to one or more preferred embodiments, it will be appreciated that various changes or modifications may be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

## Claims

1. An aircraft landing gear shock absorber (11) comprising:
a first body (12) slidably coupled to a second body (14) via a first bearing (24a) such that the bodies can move relative to one another in a linear fashion to change the shock absorber between a relatively extended condition and a relatively compressed condition, the first bearing being provided on one of the bodies and defining a first bearing surface arranged to move in sliding engagement with a first counter-face portion (26a) of the other one of the bodies as the shock absorber is extended and compressed;
a second bearing (24b, 48b) defining a second bearing surface arranged to move in sliding engagement with a second counter-face portion (26a) as the shock absorber is extended and compressed,
**characterised by**:
a first array of one or more magnets (18) associated with the first body; and
a second array of one or more magnets (22) associated with the second body, the first and second magnet arrays being arranged to magnetically interact with one another to absorb compression or extension loads applied to the shock absorber,
wherein the first bearing surface and the first counter-face portion each has a non-circular cross section profile (27) such that the first bearing surface and the first counter-face portion can be brought into mutual engagement to inhibit axial rotation of the first body relative to the second body.

2. An aircraft landing gear shock absorber according to claim 1, wherein the non-circular profile of the first bearing conforms in shape with respect to the non-circular profile of the first counter-face.

3. An aircraft landing gear shock absorber according to any preceding claim, wherein one or each bearing surface and/or the associated counter-face are formed by a plurality of discrete components (54a) which are mechanically coupled together to as to define a non-continuous cross-sectional bearing surface and/or counter-face surface.

4. An aircraft landing gear shock absorber according to any preceding claim, wherein the first body and the second body are elongate.

5. An aircraft landing gear shock absorber according to any preceding claim, wherein the first body is arranged to receive the second body during compression of the shock absorber.

6. An aircraft landing gear shock absorber according to any preceding claim, wherein the first bearing is defined by a collar (42) rotatably mounted on the body such that the other body can be axially rotated relative to the body by rotating the collar and optionally the collar is coupled to a steering mechanism (49).

7. An aircraft landing gear shock absorber according to claim1, wherein the first bearing is mounted at an end region of the first body for sliding engagement with a first counter-face portion of the second body and the second bearing is either mounted at an end region of the second body in sliding engagement with a second counter-face portion of the first body, or the second bearing is mounted on the first body, between the end regions thereof in sliding engagement with a second counter-face portion of the second body.

8. An aircraft landing gear shock absorber according to claim1, wherein the first bearing is mounted at an end region of the second body in sliding engagement with a first counter-face portion of the first body and the second bearing is either mounted at an end region of the first body for sliding engagement with a second counter-face portion of the second body or the second bearing is mounted on the first body, between the end regions thereof in sliding engagement with a second counter-face portion of the second body.

9. An aircraft landing gear shock absorber according to any of claims 1 to 8, wherein the second bearing either has a circular profile or a non-circular profile.

10. An aircraft landing gear shock absorber according to any preceding claim, wherein the shock absorber comprises a third array of one or more magnets (32) associated with the first body, the third magnet array being arranged to magnetically interact with the second magnet array to absorb axial loads applied to the shock absorber.

11. An aircraft landing gear shock absorber according to any preceding claim, wherein each magnet arrays can be arranged to act on another magnet array in an axial or radial manner.

12. An aircraft landing gear shock absorber according to any preceding claim, wherein the first body and/or second body can be generally cylindrical.

13. An aircraft landing gear assembly (10) including an aircraft landing gear shock absorber according to any preceding claim, the shock absorber further comprising an upper fitting arranged to be coupled to an aircraft and at a lower fitting arranged to be coupled to a wheel assembly.

## Patentansprüche

1. Flugzeugfahrwerkstoßdämpfer (11) aufweisend:
einen ersten Körper (12), der derart gleitbar zu einem zweiten Körper (14) via ein erstes Lager (24a) gekoppelt ist, dass sich die Körper relativ zueinander in einer linearen Art bewegen können, um den Stoßdämpfer zwischen einem relativ ausgefahrenen Zustand und einem relativ eingefahrenen Zustand zu ändern, das erste Lager ist an einem der Körper vorgesehen und definiert eine erste Lageroberfläche, die angeordnet ist sich in gleitendem Eingriff mit einem ersten Gegenflächenbereich (26a) des anderen der Körper zu bewegen, wenn der Stoßdämpfer ausgefahren und eingefahren wird;
ein zweites Lager (24b, 48b), das eine zweite Lageroberfläche definiert, die angeordnet ist sich in gleitendem Eingriff mit einem zweiten Gegenflächenbereich (26a) zu bewegen, wenn der Stoßdämpfer ausgefahren und eingefahren wird,
**gekennzeichnet dadurch**:
eine erste Matrix von einem oder mehreren Magneten (18), die zu dem ersten Körper zugehörig sind; und
eine zweite Matrix von einem oder mehreren Magneten (22), die zu dem zweiten Körper zugehörig sind, die erste und zweite Magnetenmatrizen sind angeordnet, um miteinander magnetisch zu interagieren, um Einfahr- oder Ausfahrlasten zu absorbieren, die auf den Stoßdämpfer einwirken,
wobei die erste Lageroberfläche und der erste Gegenflächenbereich jeweils ein nicht kreisförmiges Querschnittsprofil (27) derart haben, dass die erste Lageroberfläche und der erste Gegenflächenbereich in gegenseitigen Eingriff gebracht werden können, um axiale Rotation des ersten Körpers relativ zu dem zweiten Körper zu hemmen.

2. Flugzeugfahrwerkstoßdämpfer gemäß Anspruch 1, wobei die Form des nicht kreisförmigen Profils des ersten Lagers entsprechend dem nicht kreisförmigen Profil der ersten Gegenfläche angepasst ist.

3. Flugzeugfahrwerkstoßdämpfer gemäß einem der vorangehenden Ansprüche, wobei eine oder jede Lageroberfläche und/oder die dazugehörigen Gegenflächen mittels einer Mehrzahl von diskreten Komponenten (54a) geformt sind, die mechanisch miteinander gekoppelt sind, um eine nicht kontinuierliche Lagerquerschnittsfläche und/oder Gegenflächenoberfläche zu definieren.

4. Flugzeugfahrwerkstoßdämpfer gemäß einem der vorangehenden Ansprüche, wobei der erste Körper und der zweite Körper länglich sind.

5. Flugzeugfahrwerkstoßdämpfer gemäß einem der vorangehenden Ansprüche, wobei der erste Körper angeordnet ist, um den zweiten Körper während Einfahren des Stoßdämpfers aufzunehmen.

6. Flugzeugfahrwerkstoßdämpfer gemäß einem der vorangehenden Ansprüche, wobei das erste Lager mittels eines Kragens (42) definiert ist, der rotierbar an dem Körper derart befestigt ist, dass der andere Körper relativ zu dem Körper mittels Rotieren des Kragens axial rotiert werden kann, und optional ist der Kragen an einen Lenkmechanismus (49) gekoppelt.

7. Flugzeugfahrwerkstoßdämpfer gemäß Anspruch 1, wobei das erste Lager an einem Endbereich des ersten Körpers zum gleitenden Eingriff mit einem ersten Gegenflächenbereich des zweiten Körpers befestigt ist und das zweite Lager ist entweder an einem Endbereich des zweiten Körpers in gleitendem Eingriff mit einem zweiten Gegenflächenbereich des ersten Körpers befestigt oder das zweite Lager ist an dem ersten Körper zwischen dessen Endbereichen in gleitenden Eingriff mit einem zweiten Gegenflächenbereich des zweiten Körpers befestigt.

8. Flugzeugfahrwerkstoßdämpfer gemäß Anspruch 1, wobei das erste Lager an einem Endbereich des zweiten Körpers in gleitendem Eingriff mit einem ersten Gegenflächenbereich des ersten Körpers befestigt ist und das zweite Lager ist entweder an einem Endbereich des ersten Körpers zum gleitenden Eingriff mit einem zweiten Gegenflächenbereich des zweiten Körpers befestigt oder das zweite Lager ist an dem ersten Körper zwischen dessen Endbereichen in gleitendem Eingriff mit einem zweiten Gegenflächenbereich des zweiten Körpers befestigt.

9. Flugzeugfahrwerkstoßdämpfer gemäß einem der Ansprüche 1 bis 8, wobei das zweite Lager entweder ein kreisförmiges Profil oder ein nicht kreisförmiges Profil hat.

10. Flugzeugfahrwerkstoßdämpfer gemäß einem der vorangehenden Ansprüche, wobei der Stoßdämpfer eine dritte Matrix von einem oder mehreren Magneten (32) aufweist, die zu dem ersten Körper zugehörig sind, die dritte Magnetenmatrix ist angeordnet, um mit der zweiten Magnetenmatrix magnetisch zu interagieren, um axiale Lasten, die auf den Stoßdämpfer einwirken, zu absorbieren.

11. Flugzeugfahrwerkstoßdämpfer gemäß einem der vorangehenden Ansprüche, wobei jede Magnetenmatrizen angeordnet werden können, um auf eine andere Magnetenmatrix in axialer oder radialer Weise einzuwirken.

12. Flugzeugfahrwerkstoßdämpfer gemäß einem der vorangehenden Ansprüche, wobei der erste Körper und/oder zweite Körper im Allgemeinen zylindrisch sein kann.

13. Flugzeugfahrwerksanordnung (10) beinhaltend einen Flugzeugfahrwerkstoßdämpfer gemäß einem der vorangehenden Ansprüche, der Stoßdämpfer weist weiter eine obere Befestigung, die angeordnet ist, um an ein Flugzeug gekoppelt zu sein, und eine untere Befestigung, die angeordnet ist, um an eine Radanordnung gekoppelt zu sein, auf.

## Revendications

1. Amortisseur (11) de train d'atterrissage d'aéronef comprenant:
un premier corps (12) couplé à coulissement à un deuxième corps (14) par l'intermédiaire d'un premier palier (24a), de telle manière que les corps peuvent se déplacer linéairement l'un par rapport à l'autre afin de faire passer l'amortisseur d'un état relativement en extension à un état relativement comprimé, le premier palier étant installé sur l'un des corps et définissant une première surface de palier agencée de manière à se déplacer pour s'engager par coulissement avec une première partie de contre-face (26a) de l'autre des corps lorsque l'amortisseur est en extension et comprimé ;
un deuxième palier (24b, 48b) définissant une seconde surface de palier agencée de manière à se déplacer pour s'engager par coulissement avec une deuxième partie de contre-face (26a) lorsque l'amortisseur est en extension et comprimé ;
**caractérisé par** :
un premier groupe d'un ou plusieurs aimant(s) (18) associé(s) au premier corps ; et
un deuxième groupe d'un ou plusieurs aimant(s) (22) associé(s) au deuxième corps, les premier et deuxième groupes d'aimants étant agencés de manière à interagir magnétiquement l'un avec l'autre pour absorber les charges de compression ou d'extension appliquées sur l'amortisseur,
dans lequel la première surface de palier et la première partie de contre-face ont chacune un profil de section transversale non circulaire (27) de telle sorte que la première surface de palier et la première partie de contre-face peuvent être amenées en engagement mutuel pour empêcher la rotation axiale du premier corps par rapport au second corps.

2. Amortisseur de train d'atterrissage d'aéronef selon la revendication 1, dans lequel le profil non circulaire du premier palier suit la forme du profil non circulaire de la première contre-face.

3. Amortisseur de train d'atterrissage d'aéronef selon l'une quelconque des revendications précédentes, dans lequel une ou chaque surface de palier et/ou la contre-face associée sont formées par une pluralité de composants discrets (54a) qui sont couplés ensemble mécaniquement de manière à définir une surface de palier transversale non continue et/ou une surface de contre-face.

4. Amortisseur de train d'atterrissage d'aéronef selon l'une quelconque des revendications précédentes, dans lequel le deuxième corps et le second corps sont allongés.

5. Amortisseur de train d'atterrissage d'aéronef selon l'une quelconque des revendications précédentes, dans lequel le deuxième corps est agencé pour recevoir le second corps pendant la compression de l'amortisseur de chocs.

6. Amortisseur de train d'atterrissage d'aéronef selon l'une quelconque des revendications précédentes, dans lequel le premier palier est défini par un collier (42) monté à rotation sur le corps, de telle sorte que l'autre corps peut tourner axialement par rapport au corps en faisant tourner le collier et le collier est éventuellement couplé à un mécanisme de direction (49).

7. Amortisseur de train d'atterrissage d'aéronef selon la revendication 1, dans lequel le premier palier est monté au niveau d'une région d'extrémité du premier corps pour permettre un engagement par coulissement avec une première partie de contre-face du deuxième corps et le deuxième palier est soit monté au niveau d'une région d'extrémité du deuxième corps en engagement par coulissement avec une deuxième partie de contre-face du premier corps, soit le deuxième palier est monté sur le premier corps, entre les régions d'extrémité de celui-ci en engagement par coulissement avec une deuxième partie de contre-face du deuxième corps.

8. Amortisseur de train d'atterrissage d'aéronef selon la revendication 1, dans lequel le premier palier est monté au niveau d'une région d'extrémité du deuxième corps en un engagement par coulissement avec une première partie de contre-face du premier corps et le deuxième palier est soit monté au niveau d'une région d'extrémité du premier corps en engagement par coulissement avec une deuxième partie de contre-face du deuxième corps soit le deuxième palier est monté sur le premier corps, entre les régions d'extrémité de celui-ci, en engagement par coulissement avec une deuxième partie de contre-face du deuxième corps.

9. Amortisseur de train d'atterrissage d'aéronef selon l'une quelconque des revendications 1 à 8, dans lequel le deuxième palier a soit un profil circulaire soit un profil non circulaire.

10. Amortisseur de train d'atterrissage d'aéronef selon l'une quelconque des revendications précédentes, dans lequel l'amortisseur de chocs comprend un troisième groupe d'un ou plusieurs aimant(s) (32) associé(s) au premier corps, le troisième aimant étant agencé de manière à interagir, magnétiquement, avec le deuxième groupe d'aimants pour absorber les charges axiales appliquées sur l'amortisseur de chocs.

11. Amortisseur de train d'atterrissage d'aéronef selon l'une quelconque des revendications précédentes, dans lequel chaque groupe d'aimants peut être agencé de manière à agir sur un autre groupe d'aimants axialement ou radialement.

12. Amortisseur de train d'atterrissage d'aéronef selon l'une quelconque des revendications précédentes, dans lequel le premier corps et/ou le deuxième corps peut/peuvent être généralement cylindrique(s).

13. Ensemble de train d'atterrissage (10) d'aéronef comprenant un amortisseur de train d'atterrissage d'aéronef selon l'une quelconque des revendications précédentes, ledit amortisseur de comprenant en outre une fixation supérieure agencée de manière à être couplée à un aéronef et une fixation inférieure agencée de manière à être couplée à un ensemble de roue.
